# EUROPEAN PATENT APPLICATION

(11) **EP 1 120 153 A2**
(43) Date of publication of application: **01.08.2001**
(21) Application number: 01101362.0
(22) Date of filing: 22.01.2001
(51) Int. Cl.: B01F 3/04, B01J 19/20

(54) **Process for reingesting headspace gases**

(30) Priority: 24.01.2000 US 489915
(71) Applicant: PRAXAIR TECHNOLOGY, INC., Danbury, CT 06810-5113 (US)
(72) Inventor: Sweeney, Joshua Brien, Katonah, New York (US)
(74) Representative: Schwan - Schwan - Schorer

(57) **Abstract**

This invention is directed a process for mixing a gas and a liquid within a closed container having an overhead gas space using an impeller means and an auxiliary impeller means.

## Description

### Field of the Invention

The invention is related to gas-liquid mixing operations. More particularly, this invention relates to enhancing the gas-liquid mixing operations by reingesting the headspace gases.

### Background of the Invention

Chemical reactors for gas-liquid and gas-liquid-solid reactions are often designed to ingest gases from the headspace. This is particularly true for systems without inert or byproduct gases. Ingestion of headspace gases prevents these gases from being "lost" to the reaction, which in turn minimizes process inefficiency.

In gas-liquid mixing operations, certain gas mixing reactors, including the Advanced Gas Reactor (AGR) system employs a down-pumping impeller positioned within a hollow draft tube to create a recirculating flow pattern in a body of liquid contained in a mixing vessel. Because of such recirculation of the liquid downward in the hollow draft tube, vortices are formed in the upper inlet area of the draft tube to create a suction which draws gas from an overhead gas space within the vessel and mixes it with the circulating liquid passing downward into the draft tube, as disclosed in commonly assigned U.S. Patent No. Re. 32,562.

Satisfactory vortex development for such gas-liquid mixing purposes depends, among various practical operating factors, on maintaining a proper liquid level range above the top of the draft tube. If the liquid level rises above this narrow operating range, the formation of vortices is impeded, and the gas ingestion rate decreases essentially to zero. Thus, operating at liquid levels above the optimum level can substantially reduce the gas ingestion capabilities of the AGR system. Also, if the liquid level falls below the top of the draft tube, all gas suction ceases.

The AGR does not work properly when the liquid level in the reactor is greater than about ½ to ½ draft tube diameter above the draft tube. The impeller becomes liquid flooded such that the vortex AGR impeller suction, is effectively cut off. The AGR is not useful for this reason. Variable level applications are common in specialty chemical processing, particularly in hydrogenation and chlorination reactors. Successful adaptation of the AGR for use in the variable level reactors will allow benefits that have been observed in the fixed level AGR applications to realized in the variable level applications.

There are a number of methods concerned with overcoming the problems associated with using the AGR in variable level applications. In U.S. Patent No. 5,009,816, two or more AGR impeller/draft tube sets are placed one above the other. The impellers are mounted on a common shaft, with the draft tubes spaced sufficiently to allow flow from the bulk liquid into the suction of each impeller. The lowest impeller/draft tube is positioned to operate normally at the lowest operating liquid level. As the liquid level is increased during the batch, the next higher impeller/draft tube sets becomes submerged and thereby becomes activated. Thus, one of the impeller/draft tube set is never liquid flooded and the vortex entrainment mechanism of gas ingestion is effective at all levels. The multiple AGR concept described in U.S. Patent No. 5,009,816 is mechanically complex and expensive to implement. In a second method, described in U.S. Patent No. 4,919,849 and 5,244,603, the AGR impeller shaft is made hollow, and a hole is drilled into the shaft at a position above the maximum liquid level in the reactor. Hollow eductor tubes are attached to the shaft in the vicinity of the impeller suction. As the impeller rotates, a negative pressure is generated at the tips of the eductor tubes. The pressure differential between the gas space where the hole is located, and the eductor tips, causes gas to flow from the gas space through the shaft to the impeller suction.

In U.S. Patent No. 4,919,849, the use of hollow gas ingestion tubes connected to a hollow shaft is disclosed as a means located at non-optimum liquid levels during the course of gas-liquid mixing operations subject to variable liquid operations. In many gas/liquid mixing applications, particularly those in the specialty chemical and pharmaceutical areas, variations in liquid level within a vessel are very common. They may be caused by variations in the batch size processed, an increase or decrease in the volume of the reactants consumed or dissolved, or the addition or removal of materials as the reaction proceeds. In many processes, it is desirable to be able to recirculate a gas or gases that accumulate in the vessel head space. This is particularly true in the hydrogenation and oxygenation processes. Nevertheless, while drawing of the gas from the overhead space may take place in certain circumstances in which vortex development occurs, gas ingestion may be impeded.

U.S. Patent No. 4,919,849 and No. 5,244,603 provide impeller/eductor tubes which performs well as long as the pressure differential generated is greater than the liquid head above the eductor tubes. However, a problem may occur when the liquid level varies widely because the liquid head can be substantial.

U.S. Patent No. 5,004,571 discloses another method for overcoming the problems associated with variable level applications using an external surge tank and level control to maintain the liquid level in the reactor vessel at or near the optimum level for conventional AGR operation. The primary mechanism of gas dispersion is by vortex entrainment of the gas from the gas space into the impeller suction.

U.S. Patent No. 5,451,348 discloses a gas-liquid mixing apparatus and process for recirculating the liquid from a closed container, through an eductor and back into the liquid, and connecting the vacuum end of the eductor to the overhead gas space to draw gas down into the liquid. The apparatus in the '348 patent contains an impeller means for sucking gas down from the overhead space if the liquid is at operating level. Unfortunately, the rate of surface ingestion is determined, in part, by the liquid level relative to the impeller or impellers. If the liquid level changes, so does the amount of gas ingested. Frequently, in batch processing, liquid level can change dramatically, resulting in starvation of the liquid phase reaction. All impeller systems suffer from this drawback. The current invention broadens the operating range and provides more constant gas ingestion at different levels than previously existing impellers.

Many systems, such as the ones discussed above, operate inefficiently with this problem. They are designed with an optimum liquid level in mind, and tolerate sub-optimal performance over the range of liquid levels commonly encountered in batch operation.

There are two methods for reducing sensitivity of gas ingestion rate to liquid level. One method is to allow the fluid in the tank to rotate. In the absence of baffles, the impeller or impellers will create a bulk rotational flow in the direction of impeller rotation. This rotational flow creates a deep central vortex, which allows gas ingestion over a wide range of liquid levels.

A second method provides headspace gas to the liquid eduction. Gas flows from the headspace down a hollow shaft impeller and into the liquid through eductor tubes. The length and geometry of the educators, the liquid height above the eductors, and the rotational speed of the shaft determine the rate at which gas is fed. This method is also sensitive to liquid level but less so.

There are drawbacks with the two methods above. The first method creates bulk rotational flow in the tank, which is disadvantageous for liquid mixing. This bulk rotational flow also limits the effective transfer of energy from the impeller to the fluid. The result is poorer mass transfer.

Eductors are unable to produce gas ingestion rates equivalent to those generated by surface ingestion. Additionally, in gas-solid-liquid systems, eductors plugging is an additional risk.

A gas mixing process and system having an additional means for directing gas back into the solution for more complete ingestion from the overhead space may affords an advance in the art.

A need therefore exists in which a gas mixing process and system for providing a greater amount of gas ingestion from the overhead space.

### Summary of the Invention

This invention is directed a process for mixing a gas and a liquid within a closed container having an overhead gas space comprising the steps of circulating the liquid in the container by impeller means positioned in the container, such as to create a suction that draws gas down from the overhead gas space and mixes it with the recirculating liquid, provided that the liquid level is within a predetermined level range; and circulating a portion of the liquid in the container by an auxiliary impeller means positioned near the surface of the liquid level in the container, such as to create an additional suction that draws gas down from the overhead gas space and mixes it with the recirculating liquid, provided that the liquid level is above a predetermined level range.

This invention is also directed to an apparatus for mixing a gas and a liquid during the mixing operation comprising a mixing vessel having an axial flow, down-pumping impeller means positioned therein and capable of creating a circulation flow pattern within the mixing vessel, with liquid being passed downward adjacent to the impeller and an axial flow, downward pumping auxiliary impeller means positioned above the impeller means near the surface of the liquid with the liquid being passed downward toward the impeller means, the impeller means and the auxiliary means causing liquid to pass downward annually around the impeller means and upward annually along the walls of the mixing vessel, thereby developing a vortex and a drawing gas from the overhead gas space within the mixing vessel provided that the liquid is at an operating liquid level within the mixing vessel.

As used herein, the term "static liquid level" means the level of liquid in the mixing vessel in reference to a point in the vessel while the impeller or other mixing device is turned off. For example, if the liquid is 1.5 inches above the eductor tubes while the mixing device is off, the static liquid level is 1.5 inches above the eductor tubes. This static liquid level is in contrast to the liquid level during operation of the impeller or other mixing devices where gas is drawn through the vortex form the headspace yielding and expanding the rising liquid level.

As used herein, the term "gas starvation" means gas deprivation or lack of gas hold up to a specified area of liquid. For instance, the more liquid introduced into a vessel (with the mixing/main impeller constant), the smaller the vortex will become due to a larger volume of liquid to be mixed. As the volume is increased, a point will be reached which no vortex will exist. This will not allow gas to be drawn in from the headspace the way it previously had been when a vortex existed. Generally, liquid/liquid mixing will continue, but gas/liquid mixing will decrease, thus causing gas starving in a designated liquid area.

### Brief Description of the Drawings

The invention is further described with reference to the accompanying drawings in which:
FIG. 1 is a graphical representation of comparative data comparing gas holdup at different static liquid levels generated by the AGR and by the AGR with auxiliary impellers at the agitator speed of 1000 RPM;
FIG. 2 is a graphical representation of comparative data comparing gas holdup at different static liquid levels generated by the AGR and by the AGR with auxiliary impellers at the agitator speed of 2000 RPM; and
FIG. 3 is a side elevation view illustrating an embodiment in which an impeller means having a main impeller and an auxiliary impeller is used to establish fluid communication between the overhead gas space and the liquid in the mixing vessel.

### Description of the Preferred Embodiment(s)

Auxiliary impellers are added to provide ingested gas to the suction side of the main impeller system. As a general rule the main impeller system will comprise an axial impeller or an axial impeller in combination with a gas dispersing element.

In a preferred embodiment, this invention provides for a process for mixing a gas and a liquid within a closed container having an overhead gas space. The steps include filling the container with liquid to a predetermined liquid level, leaving gas space overhead. The adding and mixing a gas supply with the liquid to produce a predetermined interaction there between, a portion of the added gas escaping into the overhead gas space.

The liquid is circulated in the container by circulating the liquid in the container by impeller means positioned in the container, such as to create a suction that draws gas down from the overhead gas space and mixes it with the recirculating liquid, provided that the liquid level is within a predetermined level range; and also by recirculating a portion of the liquid in the container by an auxiliary impeller means positioned near the surface of the liquid level in the container, such as to create an additional suction that draws gas down from the overhead gas space and mixes it with the recirculating liquid, provided that the liquid level is above a predetermined level range.

The portion of the liquid-operated eductor which discharges the portion back into the liquid is continuously recirculated below the surface level thereof, to create a vacuum within the eductor.

The overhead gas space communicates with the vacuum to aspirate gas from the space down into the eductor where it mixes and discharges with the recirculating liquid below the liquid level in the container.

In another embodiment, this invention provides for an apparatus for mixing a gas and a liquid during the mixing operation. This apparatus includes a mixing vessel with an axial flow, down-pumping impeller means positioned therein and capable of creating a circulation flow pattern within the mixing vessel, with liquid being passed downward adjacent to said impeller means and an axial flow, downward pumping auxiliary impeller means positioned above the impeller means near the surface of the liquid with the liquid being passed downward toward the impeller means, the impeller means and the auxiliary means causing the liquid to pass downward annually around the impeller means, and upward along the walls of the mixing vessel, thereby developing a vortex and a drawing gas from the overhead gas space within the mixing vessel provided that the liquid is at an operating liquid level within the mixing vessel.

A liquid recirculation system us also provided which has a conduit with an outlet section withdrawing liquid from a lower area of the vessel and an inlet section for reintroducing the liquid at an upper area of the vessel, pump means for pumping the liquid through the conduit, and an eductor connected to the inlet section of the conduit, the eductor having an inlet for receiving a continuous supply of the recirculating liquid, a converging-diverging nozzle having a restricted throat for increasing the velocity of the liquid, a vacuum chamber associated with the restricted throat, and a discharge nozzle below the liquid level in the vessel and a suction tube communication between the vacuum chamber of the eductor and the overhead gas space, whereby vacuum in the vacuum chamber of the eductor draws gas from the overhead gas space through the suction tube for mixing with the recirculating liquid in the eductor and for discharge into the entrance of the impeller.

Generally, the auxiliary means is placed below the surface of the liquid, preferably at a distance effective to provide sufficient suction to pull overhead gases into the liquid.

A specific example of a main impeller system is the AGR technology, which incorporates a helical impeller for axial flow generation and a flat blade turbine for gas dispersion. Other preferred main impeller configurations that are useful include an axial hydrofoil alone or with a Rushton turbine for gas dispersion.

The auxiliary impellers will preferably be axial or mixed flow impellers. Other preferred auxiliary impeller configurations include hydrofoils and pitched blade turbines.

A laboratory scale using an AGR as the main impeller system and either a single axial impeller or two mixed flow impellers (PBTs) as the auxiliary impellers was successful developed using auxiliary impellers for 2 PBTs used in combination with an AGR.

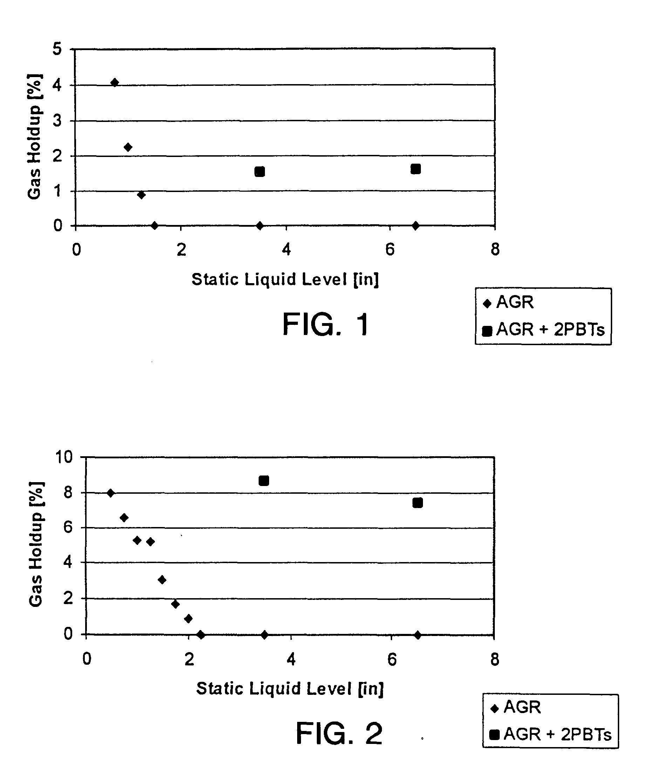

FIGS. 1 and 2 show comparative data at two different agitator speeds. The plots compare gas holdup at different static liquid levels generated by the AGR and by the AGR with auxiliary impellers. The data clearly show that the 3" AGR becomes "gas starved" at a static level approximately 1.5" above the AGR draft tube at 1000 RPM and at a static level of 2.25" at 2000 RPM. In comparison, the auxiliary impellers are providing gas ingestion at a static liquid level at 6.5" above the draft tube. The auxiliary impellers were found to provide gas ingestion at high static liquid levels at or above those found at much lower levels.

The increase in gas ingestion at high liquid levels makes the combination of auxiliary impellers with an AGR particularly well suited for batch reactor operations in which liquid level changes significantly. The auxiliary impeller has been demonstrated to broaden the range of gas ingestion and increase the level of gas ingestion.

In addition to the surprisingly high gas holdups achieved at these higher liquid levels, the specific power required (power per unit volume) is almost constant. These high gas holdups are achieved at approximately the same specific power using the additional auxiliary impellers.

These auxiliary impellers are not simply additional mixing devices. Mixing is provided by the primary impeller system. These are small impellers designed to provide enough gas to the main system to create a well-dispersed gas phase.

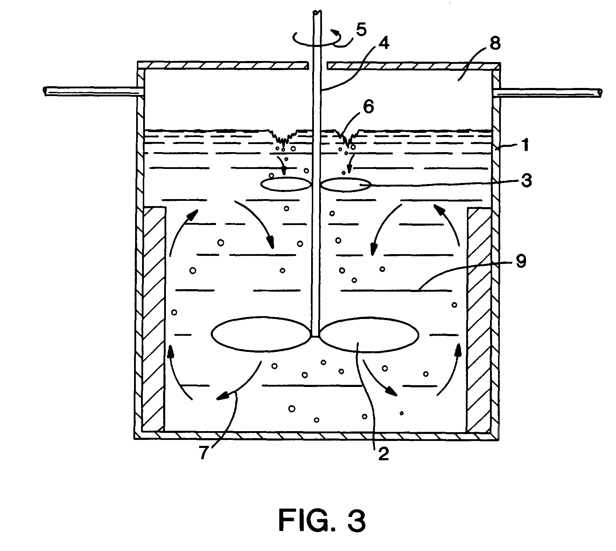

FIG. 3 is a side elevation view illustrating an embodiment in which an impeller means having a main impeller and an auxiliary impeller is used to establish fluid communication between the overhead gas space and the liquid in the mixing vessel. In operation, vortex 6 is formed downward from the surface of the liquid in the vicinity of auxiliary impeller means 3. This causes the gas in the overhead space 8 to be ingested into liquid 9. Impeller means 2 causes further downward and recirculating flow 7 of liquid in container 1. Impeller means 2 and auxiliary means 3 are affixed in shaft 4 and rotated in direction 5. Impeller means 2 and auxiliary impeller means 3 are down-pumping impeller means.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A process for mixing a gas and a liquid within a closed container having an overhead gas space comprising the steps of:
(a) circulating the liquid in the container by impeller means positioned in the container, such as to create a suction that draws gas down from the overhead gas space and mixes it with the recirculating liquid, provided that the liquid level is within a predetermined level range; and
(b) circulating a portion of the liquid in the container by an auxiliary impeller means positioned at or near the surface of the liquid level in the container, such as to create an additional suction that draws gas down from the overhead gas space and mixes it with the recirculating liquid, provided that the liquid level is above a predetermined level range.

2. The process of claim 1 further comprising the following steps prior to said circulating steps:
(a) filling the container with liquid to a predetermined liquid level, leaving gas space overhead;
(b) adding and mixing a gas supply with the liquid to produce a predetermined interaction therebetween, a portion of the added gas escaping into the overhead gas space prior to the circulating step.

3. The process of claim 1 further comprising the following steps after said circulating steps:
(a) continuously recirculating a portion of the liquid-operated eductor which discharges the portion back into the liquid, below the surface level thereof, to create a vacuum within the eductor, and
(b) communicating the vacuum with the overhead gas space to aspirate gas from the space down into the eductor where it mixes and discharges with the recirculating liquid below the liquid level in the container.

4. The process of claim 1 further comprising surrounding the impeller means with a hollow draft tube.

5. The process of claim 4 further comprising surrounding the auxiliary means with the hollow draft tube.

6. An apparatus for mixing a gas and a liquid during the mixing operation comprising a mixing vessel having an axial flow, down-pumping impeller means positioned therein and capable of creating a circulation flow pattern within the mixing vessel, with liquid being passed downward adjacent to the impeller and an axial flow, downward pumping auxiliary impeller means positioned above the impeller means near the surface of the liquid with the liquid being passed downward toward the impeller means, the impeller means and the auxiliary means causing liquid to pass downward annually around the impeller means and upward annually along the walls of the mixing vessel, thereby developing a vortex and a drawing gas from the overhead gas space within the mixing vessel provided that the liquid is at an operating liquid level within the mixing vessel.

7. The apparatus of claim 6 further comprising a liquid recirculation system, the recirculating system comprising a conduit having an outlet section withdrawing liquid from a lower area of the vessel and an inlet section for reintroducing the liquid at an upper area of the vessel, pump means for pumping the liquid through the conduit, and an eductor connected to the inlet section of the conduit, the eductor having an inlet for receiving a continuous supply of the recirculating liquid.

8. The apparatus of claim 6 wherein the mixing vessel comprises a hollow draft tube which surrounds the impeller means.

9. The apparatus of claim 8 wherein the mixing vessel comprises the hollow draft tube which surrounds the auxiliary impeller means.

10. An apparatus for mixing a gas and a liquid during the mixing operation comprising:
(a) a mixing vessel having an axial flow, down-pumping impeller means positioned therein and capable of creating a circulation flow pattern within the mixing vessel, with liquid being passed downward adjacent to the impeller means and an axial flow, downward pumping auxiliary impeller means positioned above the impeller means near the surface of the liquid with the liquid being passed downward toward the impeller means, the impeller means and the auxiliary means causing liquid to pass downward annually around the impeller means and upward annually along the walls of the mixing vessel, thereby developing a vortex and a drawing gas from the overhead gas space within the mixing vessel provided that the liquid is at an operating liquid level within the mixing vessel;
(b) a liquid recirculation system comprising a conduit having an outlet section withdrawing liquid from a lower area of the vessel and an inlet section for reintroducing the liquid at an upper area of the vessel, pump means for pumping the liquid through the conduit, and an eductor connected to the inlet section of the conduit, the eductor having an inlet for receiving a continuous supply of the recirculating liquid.
